# EUROPÄISCHE PATENTSCHRIFT

(11) **EP 3 430 483 B1**
(45) Veröffentlichungstag und Bekanntmachung des Hinweises auf die Patenterteilung: **05.08.2020**
(21) Anmeldenummer: 16711799.3
(22) Anmeldetag: 14.03.2016
(51) Int. Cl.: G05B 19/042

(54) **INBETRIEBNAHMESYSTEM FÜR EINE KÄLTEMITTELVERDICHTEREINHEIT SOWIE VERFAHREN ZUR INBETRIEBNAHME EINER KÄLTEMITTELVERDICHTEREINHEIT**
ACTIVATION SYSTEM FOR A COOLANT COMPRESSOR UNIT AND METHOD FOR ACTIVATING A COOLANT COMPRESSOR UNIT
SYSTÈME DE MISE EN SERVICE D'UNE UNITÉ DE COMPRESSION DE RÉFRIGÉRANT ET PROCÉDÉ DE MISE EN SERVICE D'UNE UNITÉ DE COMPRESSION DE RÉFRIGÉRANT

(43) Veröffentlichungstag der Anmeldung: 23.01.2019
(73) Patentinhaber: BITZER Kühlmaschinenbau GmbH, 71065 Sindelfingen (DE)
(72) Erfinder: HIEBLE, Tobias, 88175 Scheidegg (DE); GIBSON, John, 90768 Fürth (DE)
(74) Vertreter: Hoeger, Stellrecht & Partner Patentanwälte mbB
(86) Internationale Anmeldenummer: PCT/EP2016/055466
(87) Internationale Veröffentlichungsnummer: WO 2017/157415

(56) Entgegenhaltungen:
- DE-A1- 19 826 169
- DE-A1- 19 918 161
- DE-A1-102005 035 847

## Beschreibung

Die Erfindung betrifft eine Kältemittelverdichtereinheit, umfassend einen Kältemittelverdichter, einen elektrischen Antriebsmotor für den Kältemittelverdichter und eine Verdichtersteuerung, welche Spannung und Drehzahl des Antriebsmotors auf der Basis eines in diese Verdichtersteuerung geladenen Satzes von Parametern ermittelt und den Antriebsmotor entsprechend ansteuert.

Derartige Kältemittelverdichtereinheiten werden bislang so konzipiert, dass individuell je nach Aufbau derselben Konfigurationsparameter vom Anwender erstellt werden.

Inwieweit diese Konfigurationsparameter für den jeweiligen Kältemittelverdichter und/oder den elektrischen Antriebsmotor optimal oder suboptimal sind, ist dem Anwender überlassen. Ferner besteht bei einer Eingabe von Parametern eine Vielzahl von Fehlermöglichkeiten auf Seiten des Anwenders.

Aus der DE 10 2005 035 847 A1 ist ein Verfahren zur Inbetriebnahme und/oder Parametrieren eines Antriebs bekannt.

Aus der DE 198 26 169 A1 ist das Problem bekannt, standardisierte Steuerungen in Betrieb zu nehmen.

Aus der DE 199 18 161 A1 ist eine Kältemittelverdichteranlage bekannt.

Der Erfindung liegt die Aufgabe zugrunde, ein Inbetriebnahmesystem für derartige Kältemittelverdichtereinheiten zu schaffen, welches für den jeweiligen Anwender einen möglichst optimalen Betrieb der Kältemittelverdichtereinheit ermöglicht.

Diese Aufgabe wird durch ein Inbetriebnahmesystem für eine eingangs genannte Kältemittelverdichteranlage gelöst, wobei erfindungsgemäß das Inbetriebnahmesystem einen Verdichterdatenspeicher aufweist, in welchem zu jeweils möglichen Kältemittelverdichtern Verdichterdaten gespeichert sind und einen Motordatenspeicher aufweist, in welchem zu möglichen Antriebsmotoren Motordaten gespeichert sind, wobei das Inbetriebnahmesystem einen Prozessor zur Durchführung der Inbetriebnahme, eine Visualisierungseinheit und eine Eingabeeinheit für eine Bedienungsperson aufweist, wobei die Visualisierungseinheit und die Eingabeeinheit bei der Inbetriebnahme zur Bestimmung des Kältemittelverdichters und des Antriebsmotors dienen und wobei der Prozessor mittels der Verdichterdaten des bestimmten Kältemittelverdichters und mittels der Motordaten des bestimmten Antriebsmotors Verdichterkonfigurationsparameter und Motorkonfigurationsparameter erzeugt und in die Verdichtersteuerung zum Betrieb des Antriebsmotors lädt.

Der Vorteil der erfindungsgemäßen Lösung ist somit darin zu sehen, dass damit die Möglichkeit besteht, dem Anwender Verdichterkonfigurationsparameter für jeden möglichen Verdichter und Motorkonfigurationsparameter für jeden möglichen Antriebsmotor zur Verfügung zu stellen, die zusammen einen optimalen Betrieb der Kältemittelverdichtereinheit erlauben.

Besonders vorteilhaft ist es dabei, wenn die Verdichterkonfigurationsparameter und die Motorkonfigurationsparameter herstellerseitig generierte und zur Verfügung gestellte Parameter sind, die einen zuverlässigen und dauerhaft störungsfreien Betrieb sowohl des Kältemittelverdichters als auch des Antriebsmotors erlauben.

Hinsichtlich der Bestimmung des Kältemittelverdichters und des Antriebsmotors wurden bislang keine näheren Angaben gemacht.

Beispielsweise wäre es denkbar, die Bestimmung des Kältemittelverdichters dadurch durchzuführen, dass dieser manuell in ein Feld einzutragen ist.

Eine besonders günstige Lösung sieht vor, dass der Prozessor aus den Verdichterdaten eine Verdichterliste erzeugt und auf der Visualisierungseinheit darstellt.

Mit dem Erzeugen einer Verdichterliste und dem Darstellen dieser Verdichterliste auf der Visualisierungseinheit wird ein erhöhtes Maß an Komfort und Sicherheit gewährleistet, da einerseits nur Kältemittelverdichter auf der Verdichterliste dargestellt werden, die von dem Inbetriebnahmesystem vorgesehen sind, und außerdem ein erhöhter Komfort dadurch gegeben ist, dass eine Bedienungsperson lediglich aus einer bereits vorgegebenen Verdichterliste den Kältemittelverdichter der Kältemittelverdichtereinheit bestimmen muss.

Insbesondere ist dabei vorgesehen, dass mittels der Eingabeeinheit einer der Kältemittelverdichter in der Verdichterliste bestimmbar ist.

Eine derartige Bestimmung des Kältemittelverdichters in der Verdichterliste erfolgt vorzugsweise dadurch, dass der jeweilige bestimmte Kältemittelverdichter in der Verdichterliste durch die Eingabeeinheit markierbar ist, beispielsweise durch Setzen einer Markierung oder durch Anklicken desselben.

Um nun zu dem bestimmten Kältemittelverdichter aus der Verdichterliste die geeigneten Verdichterkonfigurationsparameter zu finden, ist vorzugsweise vorgesehen, dass der Prozessor mittels der Verdichterdaten die zu dem bestimmten Kältemittelverdichter gehörenden Verdichterkonfigurationsparameter erzeugt.

Hinsichtlich des Ladens der Verdichterkonfigurationsparameter in die Verdichtersteuerung wäre es prinzipiell denkbar, dass nach Erzeugen der Verdichterkonfigurationsparameter ein selbständiges Laden derselben durch den Prozessor in die Verdichtersteuerung erfolgt.

Um der Bedienungsperson jedoch die Sicherheit zu geben, welche Verdichterkonfigurationsparameter nun tatsächlich in die Verdichtersteuerung geladen werden oder in diese geladen sind, ist vorzugsweise vorgesehen, dass der Prozessor die Verdichterkonfigurationsparameter nach Bestätigen derselben mittels des Eingabeeinheit in die Verdichtersteuerung lädt.

Dies kann dadurch erfolgen, dass die Verdichterkonfigurationsparameter nochmals auf der Visualisierungseinheit dargestellt werden, oder auch dadurch, dass lediglich über die Visualisierungseinheit eine Abfrage nach einer Bestätigung für das Laden der Verdichterkonfigurationsparameter erscheint.

Vorzugsweise ist der Prozessor so ausgebildet, dass er in der Lage ist, die in der Verdichtersteuerung gespeicherten Verdichterkonfigurationsparameter in das Inbetriebnahmesystem zurückzuladen, um diese zu überprüfen und gegebenenfalls auf der Visualisierungseinheit darzustellen.

Besonders vorteilhaft ist eine Lösung, bei welcher der Prozessor die Verdichterkonfigurationsparameter mit in der Verdichtersteuerung gespeicherten Verdichterkonfigurationsparametern vergleicht und im Fall von Abweichungen durch eine Warnmeldung auf die Abweichung hinweist und diese beispielsweise auflistet.

Zur Durchführung des Vergleichs werden somit zweckmäßigerweise die in der Verdichtersteuerung gespeichterten Verdichterkonfigurationsparameter von dem Prozessor aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Darüber hinaus wurden auch hinsichtlich der Bestimmung des Antriebsmotors keine näheren Angaben gemacht.

So sieht eine vorteilhafte Lösung vor, dass der Prozessor aus den Motordaten eine Motorenliste erstellt und auf der Visualisierungseinheit darstellt.

Auch hierdurch wird einerseits die Auswahlsicherheit verbessert, da lediglich Antriebsmotoren auf der Visualisierungseinheit dargestellt werden, welche für die Kältemittelkompressoreinheit geeignet sind und außerdem wird der Komfort verbessert, da eine Bedienungsperson derartige Antriebsmotoren nicht explizit eingeben muss.

Besonders günstig ist es jedoch, wenn der Prozessor auf der Basis der Verdichterdaten für den bestimmten Kältemittelverdichter geeignete, beispielsweise herstellerseitig verfügbare, Antriebsmotoren aus den Motordaten auswählt und in der Motorenliste auf der Visualisierungseinheit darstellt.

In diesem Fall wird der Komfort bei der Bedienung des Inbetriebnahmesystems noch deutlich verbessert, wenn sich auf der Basis der Verdichterdaten bereits entnehmen lässt, welche Antriebsmotoren für den jeweiligen Kältemittelverdichter geeignet sind, so dass keine Fehlzuordnung von Antriebsmotor zu Kältemittelverdichter erfolgen kann.

Zur Bestimmung des jeweiligen Antriebsmotors aus der Motorenliste ist vorzugsweise vorgesehen, dass mittels der Eingabeeinheit einer der Antriebsmotoren aus der Motorenliste bestimmbar ist.

Somit besteht für die Bedienungsperson lediglich die Möglichkeit einen für den bereits bestimmten Kältemittelverdichter geeigneten Antriebsmotor in einfacher Weise auszuwählen, ohne dass Fehler bei der Auswahl des Antriebsmotors auftreten können.

Die Bestimmung erfolgt dabei beispielsweise dadurch, dass in der Motorenliste der jeweilige zu bestimmende Antriebsmotor mit einem Zeichen markiert oder angeklickt wird.

Um die geeigneten Motorkonfigurationsparameter aufzufinden ist vorzugsweise vorgesehen, dass der Prozessor mittels der Motordaten die zu dem bestimmten Antriebsmotor gehörenden Motorkonfigurationsparameter erzeugt.

Dabei können die Motorkonfigurationsparameter bereits in den Motordaten mit abgespeichert sein oder es besteht die Möglichkeit, aufgrund der Motordaten des bestimmten Antriebsmotors die entsprechenden Motorkonfigurationsparameter im Datenspeicher als Datei aufzufinden.

Hinsichtlich des Ladens der Motorkonfigurationsparameter in die Verdichtersteuerung wäre es ebenfalls denkbar, dies nach Erzeugung der Motorkonfigurationsparameter selbsttätig vom Prozessor durchführen zu lassen.

Um jedoch die Bedienungsperson zuverlässig und sicher über die in die Verdichtersteuerung geladenen Motorkonfigurationsparameter zu informieren, ist vorzugsweise vorgesehen, dass der Prozessor die Motorkonfigurationsparameter nach Bestätigung derselben mittels der Eingabeeinheit in die Verdichtersteuerung lädt.

Vorzugsweise ist der Prozessor so ausgebildet, dass er in der Lage ist, die in der Verdichtersteuerung gespeicherten Motorkonfigurationsparameter in das Inbetriebnahmesystem zurückzuladen, um diese zu überprüfen und gegebenenfalls auf der Visualisierungseinheit darzustellen.

Besonders vorteilhaft ist es, wenn der Prozessor die Motorkonfigurationsparameter mit in der Verdichtersteuerung gespeicherten Motorkonfigurationsparametern vergleicht und im Fall von Abweichungen durch eine Warnmeldung auf die Abweichungen hinweist und diese beispielsweise auflistet.

Zur Durchführung des Vergleichs werden somit zweckmäßigerweise die in der Verdichtersteuerung gespeicherten Motorkonfigurationsparameter von dem Prozessor aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Im Zusammenhang mit der bislang erfolgten Beschreibung der einzelnen Ausführungsbeispiele wurde lediglich auf die Verdichterkonfigurationsparameter und auf die Motorkonfigurationsparameter Bezug genommen.

Diese stellen die Mindestanforderung für einen geeigneten Betrieb der Kältemittelverdichteranlage dar.

Der Betrieb der Kältemittelverdichteranlage lässt sich jedoch noch weiter optimieren, wenn Informationen über das in dem Kältekreislauf verwendete Kältemittel vorliegen, da auch das Kältemittel Einfluss darauf hat, wie der Kältemittelverdichter durch den Antriebsmotor zu betreiben ist.

Aus diesem Grund sieht eine weitere vorteilhafte Lösung vor, dass der Prozessor aus in einem Kältemitteldatenspeicher gespeicherten Kältemitteldaten eine Kältemittelliste erzeugt und auf der Visualisierungseinheit darstellt.

Zur Bestimmung des eingesetzten Kältemittels ist vorzugsweise vorgesehen, dass mittels der Eingabeeinheit eines der Kältemittel aus der Kältemittelliste bestimmbar ist.

Auch die Bestimmung des Kältemittels aus der Kältemittelliste lässt sich in einfacher Weise dadurch realisieren, dass das Kältemittel in der Liste markiert wird.

Besonders günstig ist es, wenn der Prozessor mittels der Kältemitteldaten die zu dem bestimmten Kältemittel gehörenden Kältemittelkonfigurationsparameter erzeugt.

Auch die Kältemittelkonfigurationsparameter sind entweder bereits in den Kältemitteldaten enthalten oder aufgrund der Kältemitteldaten im Kältemitteldatenspeicher auffindbar.

Prinzipiell könnten die Kältemittelkonfigurationsparameter einen abschließenden Parametersatz für die Verdichtersteuerung darstellen.

Vielfach besteht jedoch noch bei den einem Kältemittel zugeordneten Kältemittelkonfigurationsparametern die Möglichkeit, einzelne der Parameter noch zu variieren oder auszuwählen oder abzuwählen.

Die Kältemittelkonfigurationsparameter umfassen beispielsweise nicht nur spezifische Kältemittelparameter, wie insbesondere mindestens einen der Parameter wie: den kritischen Druck, die kritische Temperatur sowie Koeffizienten zur Umrechnung der Drucke in Temperaturen, sondern auch mit dem Kältemittel zusammenhängende System- oder Anlagenparameter, wie insbesondere mindestens einen der Parameter wie: die Verdampfungs- und/oder Verflüssigungstemperatur, Temperatur- und/oder Druckgrenzwerte, die in Grenzen angepasst werden können und die somit variiert, ausgewählt oder abgewählt werden können.

Aus diesem Grund ist vorzugsweise vorgesehen, dass der Prozessor aus den Kältemittelkonfigurationsparametern des bestimmten Kältemittels Auswahlparameter extrahiert und auf der Visualisierungseinheit darstellt.

Damit besteht die Möglichkeit die nicht eindeutig in den Kältemittelkonfigurationsparametern noch als variierbare Auswahlparameter vorhandenen Parameter einer Bedienungsperson zur Kenntnis zu bringen und dieser die Möglichkeit zur Bestimmung derselben zu geben.

Besonders günstig ist es dabei, wenn mittels der Eingabeeinheit die dargestellten Auswahlparameter bestimmbar sind.

Zum Laden der Kältemittelkonfigurationsparameter ist zweckmäßigerweise vorgesehen, dass der Prozessor die Kältemittelkonfigurationsparameter, insbesondere mitsamt den bestimmten Auswahldaten, nach einer Bestätigung derselben mittels der Eingabeeinheit in die Anlagesteuerung lädt.

Vorzugsweise ist der Prozessor so ausgebildet, dass er in der Lage ist, die in der Verdichtersteuerung gespeicherten Kältemittelkonfigurationsparameter in das Inbetriebnahmesystem zurückzuladen, um diese zu überprüfen und gegebenenfalls auf der Visualisierungseinheit darzustellen.

Besonders vorteilhaft ist es, wenn der Prozessor die Kältemittelkonfigurationsparameter mit in der Verdichtersteuerung gespeicherten Kältemittelkonfigurationsparametern vergleicht und im Fall von Abweichungen durch eine Warnmeldung auf die Abweichungen hinweist und diese beispielsweise auflistet.

Zur Durchführung des Vergleichs werden somit zweckmäßigerweise die in der Verdichtersteuerung gespeicherten Kältemittelkonfigurationsparameter von dem Prozessor aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Die Verdichterkonfigurationsparameter, die Motorkonfigurationsparameter und die Kältemittelkonfigurationsparameter können entweder nach ihrer jeweiligen Erzeugung oder gleichzeitig in die Verdichtersteuerung geladen werden. Hinsichtlich der Realisierung des Verdichterdatenspeichers, des Motordatenspeichers und des Kältemitteldatenspeichers wurden bislang keine näheren Angaben gemacht.

So sieht eine Vorteilhafte Lösung vor, dass der Verdichterdatenspeicher, der Motordatenspeicher und der Kältemitteldatenspeicher in einer Datenspeichereinheit realisiert sind.

Die Datenspeichereinheit kann dabei eine jegliche Art von Datenspeichereinheit, wie beispielsweise ein Bereich einer Festplatte oder eine Speicherkarte sein.

Um die Verdichterdaten, die Motordaten und die Kältemitteldaten in einfacher Weise aktualisieren zu können, ist vorzugsweise vorgesehen, dass die Verdichterdaten und/oder die Motordaten und/oder die Kältemitteldaten in der Datenspeichereinheit durch Verbindung mit einem externen Server aktualisierbar sind.

In diesem Fall wird der externe Server beispielsweise vom Hersteller der Kältemittelverdichter betrieben und die zur Verfügung gestellten Daten werden laufend aktualisiert, so dass sich damit auch in einfacher Weise die Verdichterdaten und/oder die Motordaten und/oder die Kältemitteldaten in einfacher Weise aktualisieren lassen.

Alternativ oder ergänzend ist es auch möglich derartige Daten manuell einzugeben.

Hinsichtlich der Arbeitsweise der Verdichtersteuerung wurden bislang keine näheren Angaben gemacht.

So ist vorzugsweise vorgesehen, dass die Verdichtersteuerung auf der Basis von mindestens einem der Sätze von Verdichterkonfigurationsparametern, Motorkonfigurationsparametern und Kältemittelkonfigurationsparametern den Antriebsmotor steuert.

Vorzugsweise ist vorgesehen, dass die Verdichtersteuerung den Kältemittelverdichter innerhalb vorgesehener Einsatzgrenzen betreibt, wobei die Einsatzgrenzen sich beispielsweise aus Verdichterkonfigurationsparametern und Kältemittelkonfigurationsparametern ergeben.

Insbesondere ist bei der Ausbildung der Verdichtersteuerung vorgesehen, dass diese einen Frequenzumrichter umfasst, der den drehzahlgesteuerten Betrieb des elektrischen Antriebsmotors ermöglicht.

Vorzugsweise ist dabei vorgesehen, dass der Frequenzumrichter auf der Basis der geladenen Verdichterkonfigurationsparameter und der geladenen Motorkonfigurationsparameter arbeitet, wobei gegebenenfalls lediglich ein Teil der Verdichterkonfigurationsparameter für den Betrieb des Frequenzumrichters erforderlich ist, während gegebenenfalls ein Teil der Verdichterkonfigurationsparameter für den Gesamtbetrieb der Verdichtersteuerung erforderlich ist und beispielsweise eine Regelcharakteristik der Verdichtersteuerung beeinflusst.

Darüber hinaus betrifft die Erfindung ein Verfahren zur Inbetriebnahme einer Kältemittelverdichtereinheit, umfassend einen Kältemittelverdichter, einen elektrischen Antriebsmotor für den Kältemittelverdichter und eine Verdichtersteuerung, welche Spannung und Drehzahl des Antriebsmotors auf der Basis von in diese Verdichtersteuerung geladenen Sätzen von Konfigurationsparametern ermittelt und den Antriebsmotor entsprechend ansteuert, wobei erfindungsgemäß aus einem Verdichterdatenspeicher, in welchem zu jeweils möglichen Kältemittelverdichtern Verdichterdaten gespeichert sind, und einem Motordatenspeicher, in welchem zu möglichen Antriebsmotoren Motordaten gespeichert sind, zur Durchführung der Inbetriebnahme mögliche Kältemittelverdichter und Antriebsmotoren bestimmt werden und wobei von einem Inbetriebnahmesystem mittels der Verdichterdaten des bestimmten Kältemittelverdichters und mittels der Motordaten des bestimmten Antriebsmotors Verdichterkonfigurationsparameter und Motorkonfigurationsparameter erzeugt und in die Verdichtersteuerung zum Betrieb des Antriebsmotors geladen werden.

Der Vorteil der erfindungsgemäßen Lösung besteht ebenfalls in gleicher Weise wie bei dem Inbetriebnahmesystem darin, dass einerseits eine komfortable und fehlerfreie Erzeugung der Verdichterkonfigurationsparameter und Motorkonfigurationsparameter möglich ist.

Besonders günstig ist es zur Bestimmung des Kältemittelverdichters, wenn aus den gespeicherten Verdichterdaten eine Verdichterliste erzeugt und auf der Visualisierungseinheit dargestellt wird.

Insbesondere lässt sich dann in einfacher Weise der Kältemittelverdichter dadurch auswählen, dass mittels der Eingabeeinheit einer der Kältemittelverdichter in der Verdichterliste bestimmt wird.

Zur Verbesserung des Komforts und der Fehlersicherheit ist ferner vorgesehen, dass mittels der Verdichterdaten die zu dem bestimmten Kältemittelverdichter gehörenden Verdichterkonfigurationsparameter erzeugt werden.

Für die Bedienungsperson ist es besonders vorteilhaft, wenn die Verdichterkonfigurationsparameter nach Bestätigen derselben mittels der Eingabeeinheit in die Verdichtersteuerung geladen werden, so dass der Bedienungsperson bewusst ist, welche Verdichterkonfigurationsparameter nun in der Verdichtersteuerung vorhanden sind.

Vorzugsweise ist vorgesehen, dass die in der Verdichtersteuerung gespeicherten Verdichterkonfigurationsparameter in das Inbetriebnahmesystem zurückgeladen werden können, damit diese überprüft und gegebenenfalls auf der Visualisierungseinheit dargestellt werden können.

Besonders vorteilhaft ist es, wenn die Verdichterkonfigurationsparameter mit in der Verdichtersteuerung gespeicherten Verdichterkonfigurationsparametern verglichen werden und im Fall von Abweichungen durch eine Warnmeldung auf die Abweichungen hinweist und diese beispielsweise aufgelistet werden.

Zur Durchführung des Vergleichs werden daher zweckmäßigerweise die in der Verdichtersteuerung gespeicherten Verdichterkonfigurationsparameter von dem Prozessor aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Eine weitere vorteilhafte Ausführungsform des erfindungsgemäßen Verfahrens sieht vor, dass aus den Motordaten eine Motorenliste erstellt und auf der Visualisierungseinheit dargestellt wird, so dass dadurch ebenfalls die Auswahl des Antriebsmotors für eine Bedienungsperson erleichtert wird.

Besonders günstig ist es, wenn mittels der Verdichterdaten für den bestimmten Kältemittelverdichter geeignete Antriebsmotoren aus den Motordaten ausgewählt und in der Motorenliste auf der Visualisierungseinheit dargestellt werden, so dass dadurch bereits eine Verknüpfung zwischen dem ausgewählten Kältemittelverdichter und den für diesen Kältemittelverdichter vorgeschlagenen Motoren erfolgt und somit ausgeschlossen werden kann, dass Motoren vorgeschlagen werden, die zu dem ausgewählten Kältemittelverdichter nicht passen.

Für die Bedienungsperson wird ferner die Auswahl dadurch erleichtert, dass mittels der Eingabeeinheit ein Antriebsmotor aus der Motorenliste bestimmt wird, so dass dadurch die Auswahl des geeigneten Antriebsmotors für die Bedienungsperson stark erleichtert wird.

Ferner ist es für eine Bedienungsperson von Vorteil, wenn mittels der Motordaten die zu dem bestimmten Antriebsmotor gehörenden Motorkonfigurationsparameter erzeugt werden.

Um für die Bedienungsperson sicherzustellen, welche Motorkonfigurationsparameter in die Verdichtersteuerung geladen werden, ist vorzugsweise vorgesehen, dass die Motorkonfigurationsparameter nach bestätigen derselben mittels der Eingabeeinheit in die Verdichtersteuerung geladen werden.

Vorzugsweise ist vorgesehen, dass die in der Verdichtersteuerung gespeicherten Motorkonfigurationsparameter in das Inbetriebnahmesystem zurückgeladen werden können, damit diese überprüft und gegebenenfalls auf der Visualisierungseinheit dargestellt werden können.

Besonders vorteilhaft ist es, wenn die Motorkonfigurationsparameter mit in der Verdichtersteuerung gespeicherten Motorkonfigurationsparameter verglichen werden und im Fall von Abweichungen durch eine Warnmeldung auf die Abweichungen hinweist und diese beispielsweise aufgelistet werden.

Zur Durchführung des Vergleichs werden daher zweckmäßigerweise die in der Verdichtersteuerung gespeicherten Motorkonfigurationsparameter aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Im Zusammenhang mit den bisherigen Verfahrensschritten wurde nicht weiter spezifiziert, ob Kältemitteldaten verwendet werden oder nicht.

Zur Verbesserung der Effizienz des durch die Verdichtersteuerung gesteuerten Betriebs der Kältemittelverdichtereinheit ist es vorteilhaft, wenn aus in einem Kältemitteldatenspeicher gespeicherten Kältemitteldaten eine Kältemittelliste erstellt und auf der Visualisierungseinheit dargestellt wird.

Damit wird in gleicher Weise wie bei der Bestimmung des Kältemittelverdichters und des Antriebsmotors die Bestimmung des Kältemittels erleichtert.

Vorzugsweise ist in diesem Zusammenhang vorgesehen, dass mittels der Eingabeeinheit ein Kältemittel aus der Kältemittelliste bestimmt wird, so dass die Bedienungsperson die geeigneten Kältemittel präsentiert bekommt und somit vermieden werden kann, dass seitens der Bedienungsperson ein ungeeignetes Kältemittel ausgewählt wird.

Um zutreffend zu den erforderlichen Kältemittelkonfigurationsdaten zu gelangen, ist vorzugsweise vorgesehen, dass mittels der Kältemitteldaten die zu dem bestimmten Kältemittel gehörenden Kältemittelkonfigurationsparameter erstellt werden.

Vielfach sind die Kältemittelkonfigurationsparameter nicht abschließend bestimmt, so dass gegebenenfalls ein Teil der Kältemittelkonfigurationsparameter noch entweder gänzlich frei oder zumindest zum Teil wählbar ist.

Die Kältemittelkonfigurationsparameter umfassen beispielsweise nicht nur spezifische Kältemittelparameter, wie insbesondere mindestens einen der Parameter wie den kritischen Druck, die kritische Temperatur sowie Koeffizienten zur Umrechnung der Drucke in Temperaturen, sondern auch mit dem Kältemittel zusammenhängende System- oder Anlagenparameter, wie insbesondere mindestens einen der Parameter wie die Verdampfungs- und/oder Verflüssigungstemperatur, Temperatur- und/oder Druckgrenzwerte, die in Grenzen angepasst werden können und die somit variiert, ausgewählt oder abgewählt werden können.

Aus diesem Grund ist vorzugsweise vorgesehen, dass aus den Kältemittelkonfigurationsparametern Auswahlparameter extrahiert und auf der Visualisierungseinheit dargestellt werden.

Vorzugsweise ist hierzu vorgesehen, dass mittels der Eingabeeinheit die dargestellten Auswahlparameter bestimmt werden, wobei das Bestimmen der dargestellten Auswahlparameter entweder durch Eingabe konkreter möglicher Werte oder durch Auswählen einzelner Werte mittels Markieren erfolgt.

Hinsichtlich des Ladens der Kältemittelkonfigurationsparameter wäre es prinzipiell möglich, diese nach ihrem Ermitteln zu laden.

Um jedoch eine Bedienungsperson über die geladenen Kältemittelkonfigurationsparameter zu informieren ist vorzugsweise vorgesehen, dass die Kältemittelkonfigurationsparameter, insbesondere mitsamt den Auswahlparametern, nach einer Bestätigung derselben mittels der Eingabeeinheit in die Verdichtersteuerung geladen werden.

Dabei kann ein Bestätigen des Ladens lediglich durch ein Anfragefenster erfolgen oder es ist vorgesehen, die Kältemittelkonfigurationsparameter und gegebenenfalls die Auswahlparameter auf der Visualisierungseinheit darzustellen und dann diese Werte mittels der Eingabeeinheit zu bestätigen.

Vorzugsweise ist vorgesehen, dass die in der Verdichtersteuerung gespeicherten Kältemittelkonfigurationsparameter in das Inbetriebnahmesystem zurückgeladen werden können, damit diese überprüft und gegebenenfalls auf der Visualisierungseinheit dargestellt werden können. Besonders vorteilhaft ist es, wenn der Prozessor die Kältemittelkonfigurationsparameter mit in der Verdichtersteuerung gespeicherten Kältemittelkonfigurationsparameter vergleicht und im Fall von Abweichungen durch eine Warnmeldung auf die Abweichungen hinweist und diese beispielsweise auflistet.

Zur Durchführung des Vergleichs werden zweckmäßigerweise die in der Verdichtersteuerung gespeicherten Kältemittelkonfigurationsparameter von dem Prozessor aus der Verdichtersteuerung zurückgeladen.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

Weitere Merkmale und Vorteile sind Gegenstand der nachfolgenden Beschreibung sowie der zeichnerischen Darstellung einiger Ausführungsbeispiele. In der Zeichnung zeigen:
- Fig. 1: eine schematische Darstellung eines Kältemittelkreislaufs mit einer Kältemittelverdichtereinheit und einer Inbetriebnahmeeinheit;
- Fig. 2: eine exemplarische Darstellung möglicher Verdichterkonfigurationsparameter;
- Fig. 3: eine exemplarische Darstellung möglicher Motorkonfigurationsparameter;
- Fig. 4: eine Darstellung möglicher Kältemittelkonfigurationsparameter;
- Fig. 5a, b: ein exemplarisches Ablaufschema für die Funktionsweise eines ersten Ausführungsbeispiels eines erfindungsgemäßen Inbetriebnahmesystems und
- Fig. 6a, b: ein Ablaufschema eines zweiten Ausführungsbeispiels eines erfindungsgemäßen Inbetriebnahmesystems.

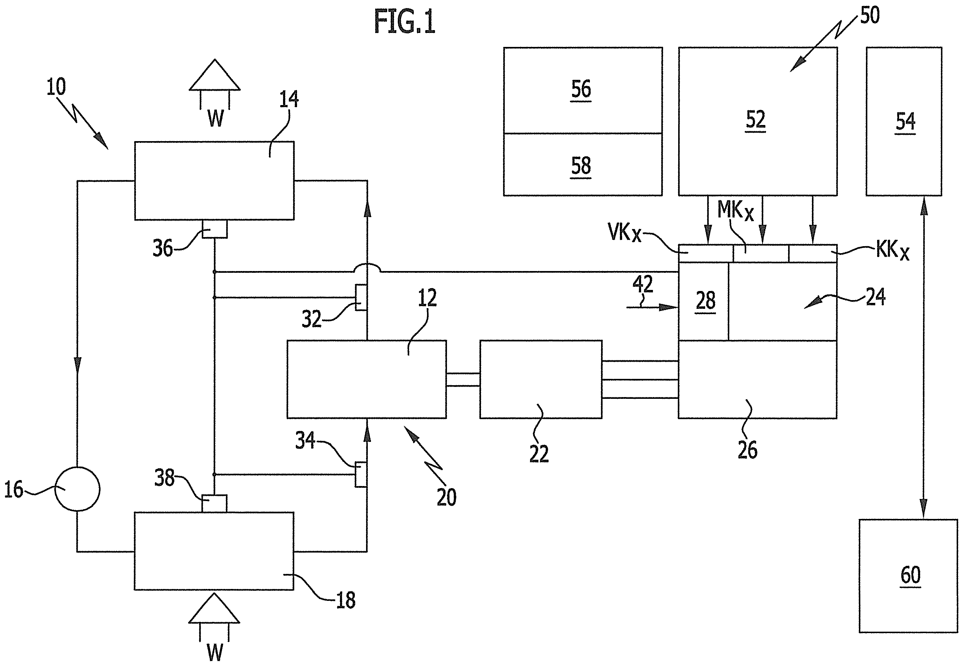

In einem als Fig. 1 dargestellten und als Ganzes mit 10 bezeichneten Kältemittelkreislauf ist ein Kältemittelverdichter 12 angeordnet, welcher das in dem Kältemittelkreislauf 10 geführte Kältemittel verdichtet und einer Wärmetauschereinheit 14 zuführt, in welcher durch Abgabe von Wärme W eine Kühlung des durch das Verdichten in dem Kältemittelverdichter 12 erhitzten Kältemittels erfolgt.

Von der Wärmetauschereinheit 14 wird das dann von dieser abgekühlte Kältemittel einem Expansionsorgan 16 zugeführt, in welchem eine Expansion des Kältemittels erfolgt, das dann nachfolgend einer Wärmetauschereinheit 18 zugeführt wird, in welcher das expandierte Kältemittel in der Lage ist, Wärme W aufzunehmen und somit das wärmeabgebende Medium zu kühlen.

Das in dem Wärmetauscher 18 aufgewärmte Kältemittel wird dann wiederum dem Kältemittelverdichter 12 zugeführt.

Der Kältemittelverdichter 12 ist Teil einer als Ganzes mit 20 bezeichneten Kältemittelverdichtereinheit, welche neben dem Kältemittelverdichter 12 einen Antriebsmotor 22 aufweist, der durch mechanische Kopplung den Kältemittelverdichter 12 treibt, und außerdem umfasst die Kältemittelverdichtereinheit 20 eine Verdichtersteuerung 24, welche ihrerseits einen Umrichter 26 zur drehzahlgeregelten Ansteuerung des Antriebsmotors 22 aufweist und insbesondere gegebenenfalls noch eine Regeleinheit 28 angesteuert wird, wobei die Regeleinheit 28 eine integrale oder separate Einheit sein kann.

Die Regeleinheit 28 erfasst beispielsweise mit einem oder mehreren Sensoren 32 bis 38 einen Druck und/oder eine Temperatur im Kältemittelkreislauf 10, wobei beispielsweise die Sensoren 32 und 34 Drucksensoren oder auch Temperatursensoren sind, beispielsweise zur Erfassung des Ausgangsdrucks beziehungsweise Eingangsdrucks oder die Ausgangstemperatur beziehungsweise die Eingangstemperatur des Kältemittelverdichters 12, und wobei beispielsweise die Sensoren 36 bis 38 Temperatursensoren sind, beispielsweise zur Erfassung der Temperatur der Wärmetauschereinheit 14 beziehungsweise der Temperatur der Wärmetauschereinheit 18.

Die Regeleinheit 28 kann aber auch auf der Basis eines externen Regelsignals 42 arbeiten.

Um den Kältemittelverdichter 12 und den Antriebsmotor 22 betriebssicher und optimal durch die Verdichtersteuerung 24, insbesondere den Umrichter 26, optimal drehzahlgeregelt und energieoptimiert antreiben zu können, sind die vom Umrichter 26 zur Verfügung gestellte Spannung, der vom Umrichter 26 erzeugte Strom und auch der zeitliche Verlauf derselben, d.h. die Frequenz oder Drehzahl, im Hinblick auf den drehzahlgeregelten Betrieb des Antriebsmotors 22 einerseits an die Konfiguration des Kältemittelverdichters 12 und andererseits an die Konfiguration des Antriebsmotors 22 anzupassen.

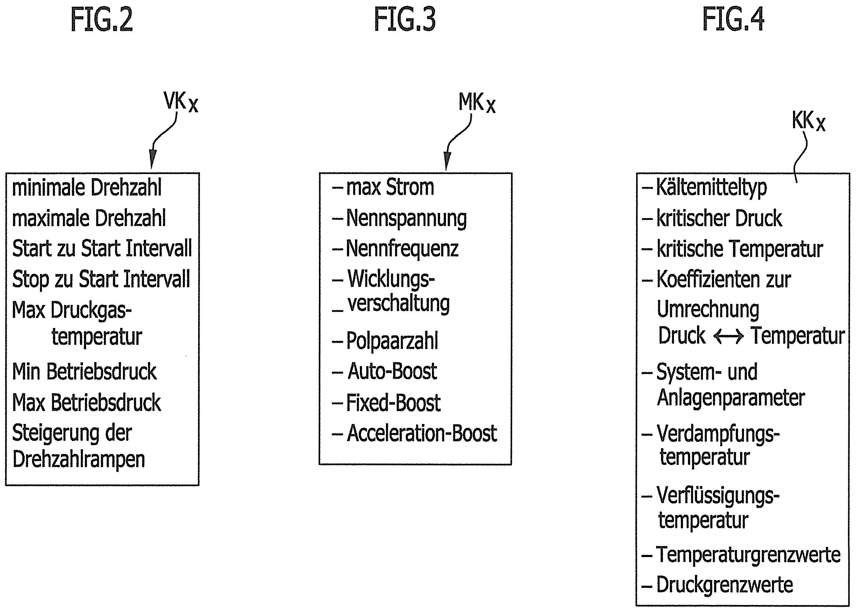

Der Kältemittelverdichter 12 ist dabei durch so genannte Verdichterkonfigurationsparameter VKx definiert, welche beispielsweise mindestens einen oder mehrere folgender Parameter wie: minimale Drehzahl, maximale Drehzahl, Start zu Start Intervall, Stopp zu Start Intervall, maximale Druckgastemperatur, minimalen Betriebsdruck, maximalen Betriebsdruck, maximal mögliche Steigungen der möglichen Drehzahlrampen sowie Kältemitteldaten umfassen (Fig. 2).

Darüber hinaus ist es erforderlich, für den Antriebsmotor 22 Motorkonfigurationsparameter MKx vorzugeben, welche beispielsweise mindestens einen oder mehrere folgender Parameter wie: den maximalen Strom, die Nennspannung, die Nennfrequenz, insbesondere das Spannungsfrequenzverhältnis und gegebenenfalls die Wicklungsverschaltung und Charakteristik, beispielsweise repräsentiert durch das Motorersatzschaltbild, die Polpaarzahl, das Kommentierungsverfahren, Auto-, Fixed-, Acceleration-Boost, umfassen (Fig. 3).

Darüber hinaus sind vorzugsweise der Verdichtersteuerung 24 Kältemittelkonfigurationsparameter KKx vorgegeben, welche beispielsweise mindestens einen oder mehrere folgender Parameter wie: den Kältemitteltyp, den kritischen Druck, die kritische Temperatur, Koeffizienten zur Umrechnung Druck in Temperatur, sowie an den System- und Anlagenparameter wie beispielsweise Verdampfungstemperatur, Verflüssigungstemperatur, Temperaturgrenzwerte, Druckgrenzwerte, umfassen (Fig. 4).

Die Verdichterkonfigurationsparameter VKx, die Motorkonfigurationsparameter MKx und die Kältemittelkonfigurationsparameter KKx sind in die Verdichtersteuerung 24 zu laden, so dass die Verdichtersteuerung 24 mit dem Umrichter 26 entsprechend diesen Konfigurationsparametern in der Lage ist, den Kältemittelverdichter 12 mittels des Antriebsmotors 22 in den jeweiligen Betriebszuständen, insbesondere innerhalb vorgesehener Einsatzgrenzen, optimal zu betreiben.

Um ein und dieselbe Verdichtersteuerung 24 für die verschiedensten Kombinationen von Antriebsmotor 22 und Kältemittelverdichter 12 der jeweiligen Kältemittelverdichtereinheit 20 einsetzen zu können, ist erfindungsgemäß ein in Fig. 1 als Ganzes mit 50 bezeichnetes Inbetriebnahmesystem geschaffen, welches einen Prozessor 52, eine Datenspeichereinheit 54, eine Visualisierungseinheit 56 sowie eine Eingabeeinheit 58 umfasst. Vorzugsweise umfasst die Datenspeichereinheit 54 einen Verdichterdatenspeicher 54V, einen Motordatenspeicher 54M und einen Kältemitteldatenspeicher 54K die entweder separate Speicher sein können oder in einer einzigen Speichereinheit zusammengefasst sind.

Die Datenspeichereinheit 54 kann dabei eine Festplatte auf einem Rechner sein oder eine Speicherkarte mit diesen Daten.

Zur Abspeicherung und/oder Aktualisierung der Verdichterdaten, der Motordaten MD und/oder der Kältemitteldaten KD ist vorzugsweise eine Verbindung der Datenspeichereinheit 54 mit einem Server 60 über das Internet herstellbar, wobei auf dem Server 60 beispielsweise vom Hersteller des Kältemittelverdichters 12 und/oder des Antriebsmotors 22 die Daten ständig aktualisiert vorgehalten werden.

Das Inbetriebnahmesystem 50 kann als separates System vorgesehen sein, das lediglich zur Inbetriebnahme mit der Verdichtersteuerung 24 kommuniziert oder es ist denkbar, das Inbetriebnahmesystem 50 und die Verdichtersteuerung 24 zu einer Einheit dauerhaft zusammenzufassen.

Ein derartiges Inbetriebnahmesystem 50 ermöglicht es, die Verdichterkonfigurationsparameter VKx, die Motorkonfigurationsparameter MKx und gegebenenfalls Kältemittelkonfigurationsparameter KKx entsprechend dem in der Kältemittelverdichtereinheit 20 eingesetzten Kältemittelverdichter 12, dem eingesetzten elektrischen Antriebsmotor 22 und dem im Kältemittelkreislauf 10 eingesetzten Kältemittel zu ermitteln und in die Verdichtersteuerung 24 zu laden, so dass die Verdichtersteuerung 24 in der Lage ist, auf der Basis dieser Parameter die Kältemittelverdichtereinheit 20 zu betreiben.

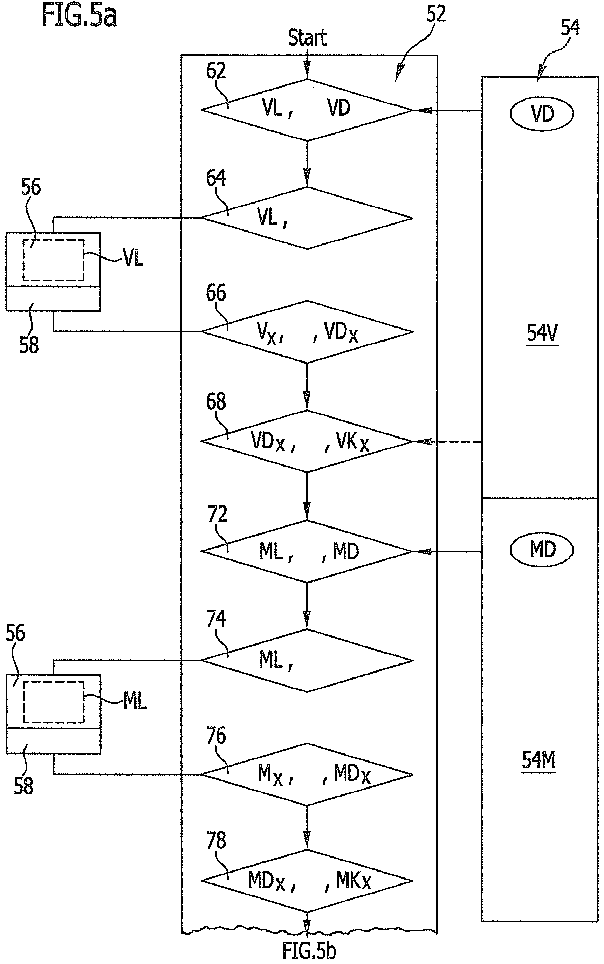

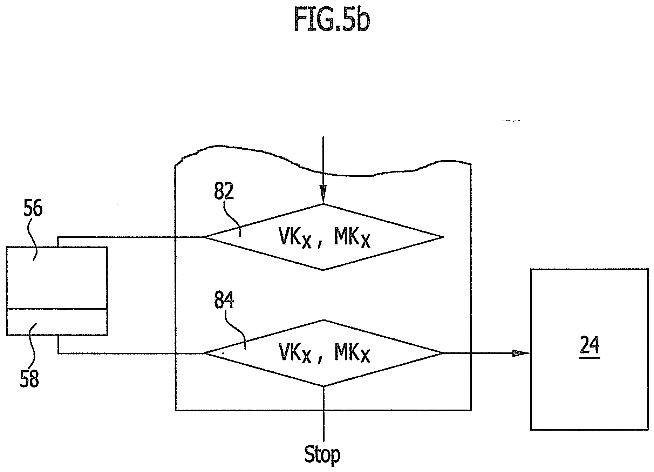

Ein erstes Ausführungsbeispiel eines durch den Prozessor 52 ausgeführten Verfahrens ist beispielhaft in Fig. 5 dargestellt.

Nach dem Start erzeugt der Prozessor 52 in einem ersten Schritt 62 aufgrund von in einem Verdichterdatenspeicher 54V der Datenspeichereinheit 54 abgespeicherten Verdichterdaten VD eine Verdichterliste VL, welche die möglichen Kältemittelverdichter enthält, die als Kältemittelverdichter 12 in der Kältemittelverdichtereinheit 20 eingesetzt sein können.

In einem zweiten Schritt 64 wird die Verdichterliste VL auf der Visualisierungseinheit 56 dargestellt und eine Bedienungsperson hat die Möglichkeit, mittels der Eingabeeinheit 58 durch Markieren derselben den Kältemittelverdichter 12 zu bestimmen, der in der Kältemittelverdichtereinheit 20 zum Einsatz kommt oder zum Einsatz kommen soll.

In einem dritten Schritt 66 erfasst der Prozessor 52 den von der Eingabe durch die Eingabeeinheit 58 aus der Verdichterliste VL bestimmten Kältemittelverdichter Vx und ist somit in der Lage, mittels der zu diesem Kältemittelverdichter Vx gehörenden Verdichterdaten VDx im nächsten Schritt 68 die Verdichterkonfigurationsparameter VKx zu ermitteln, die entweder Teil der Verdichterdaten VDx sind oder separat in der Datenspeichereinheit 54 abgelegt sind.

Im nächstfolgenden Schritt 72 erzeugt der Prozessor 52 aus den in einem Motordatenspeicher 54M der Datenspeichereinheit 54 gespeicherten Motordaten MD eine Motorenliste ML die im nächstfolgenden Schritt 74 auf der Visualisierungseinheit 56 als Motorenliste ML dargestellt wird, wobei eine Bedienungsperson die Möglichkeit hat, durch die Eingabeeinheit 58 einen Antriebsmotor Mx aus der Motorenliste ML durch Markieren zu bestimmen, der in der Kältemittelverdichtereinheit 20 eingesetzt wird oder eingesetzt werden soll, wobei zu diesem Motor Mx aus der Motorenliste ML die Motordaten MDx gehören.

Im nächstfolgenden Schritt 78 erzeugt der Prozessor 52 mittels der Motordaten MDx die Motorkonfigurationsparameter MKx.

Sofern keine Kältemitteldaten erforderlich sind oder eingegeben werden sollen, erfolgt im nächsten Schritt 82 auf der Visualisierungseinheit 56 entweder die Darstellung der Anfrage, ob die Verdichterkonfigurationsparameter VKx und die Motorkonfigurationsparameter MKx in die Verdichtersteuerung 24 geladen werden sollen oder es erfolgt zur Vergewisserung noch ergänzend dazu die Darstellung der Verdichterkonfigurationsparameter VKx und der Motorkonfigurationsparameter MKx auf der Visualisierungseinheit 56 und nach Bestätigung der Bedienungsperson über die Eingabeeinheit 58 erfolgt im Schritt 84 das Laden der Verdichterkonfigurationsparameter VKx und der Motorkonfigurationsparameter MKx in die Verdichtersteuerung 24 so dass diese somit die für den Betrieb der Kältemittelverdichtereinheit 20 mit dem jeweiligen Kältemittelverdichter 12 und dem jeweiligen Antriebsmotor 22 erforderlichen Konfigurationsparameter vorliegen hat.

Bei einer Variante des ersten Ausführungsbeispiels des durch den Prozessor 52 ausgeführten Verfahrens ist der Prozessor 52 so ausgebildet, dass er in der Lage ist, die in der Verdichtersteuerung 24 gespeicherten Verdichterkonfigurationsparameter und Motorkonfigurationsparameter in das Inbetriebnahmesystem 50 zurückzuladen, um diese zu überprüfen und gegebenenfalls auf der Visualisierungseinheit 56 darzustellen.

Ergänzend hierzu ist beispielsweise bei dieser Variante im Schritt 82 vorgesehen, dass der Prozessor 52 die Verdichterkonfigurationsparameter VKx mit in der Verdichtersteuerung 24 gespeicherten Verdichterkonfigurationsparametern vergleicht und im Fall von Abweichungen durch eine Warnmeldung auf der Visualisierungseinheit 56 auf die Abweichungen hinweist und diese beispielsweise auf der Visualisierungseinheit 56 auflistet, wobei zur Durchführung des Vergleichs die in der Verdichtersteuerung 24 gespeicherten Verdichterkonfigurationsparameter von dem Prozessor aus der Verdichtersteuerung 24 zurückgeladen werden.

In gleicher Weise ist beispielsweise bei dieser Variante im Schnitt 82 vorgesehen, dass der Prozessor 52 die Motorkonfigurationsparameter MKx mit in der Verdichtersteuerung 24 gespeicherten Motorkonfigurationsparametern vergleicht und im Fall von Abweichungen durch eine Warnmeldung auf der Visualisierungseinheit 56 auf die Abweichungen hinweist und diese beispielsweise auf der Visualisierungseinheit 56 auflistet, wobei zur Durchführung des Vergleichs die in der Verdichtersteuerung 24 gespeicherten Motorkonfigurationsparameter von dem Prozessor 52 aus der Verdichtersteuerung 24 zurückgeladen werden.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

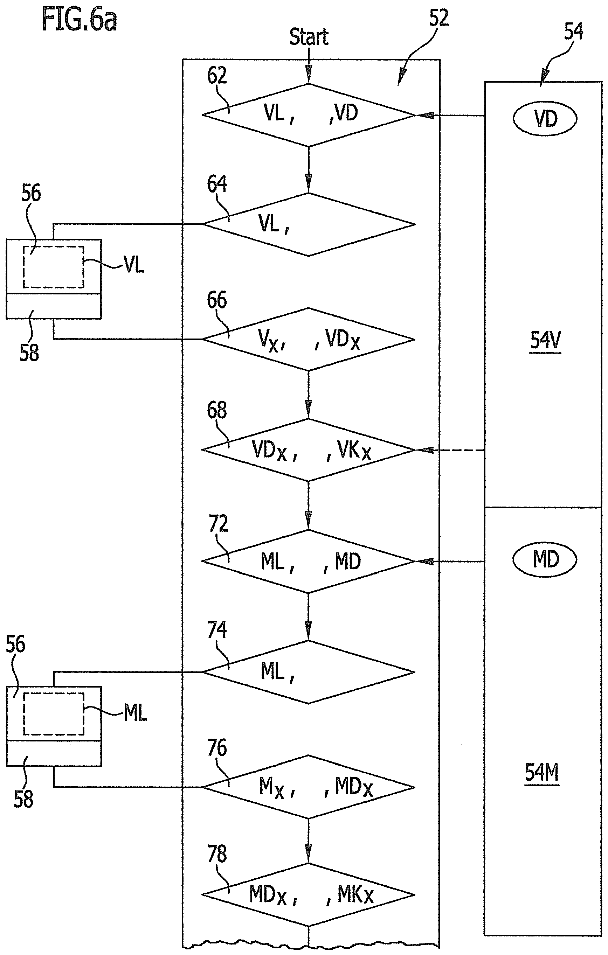

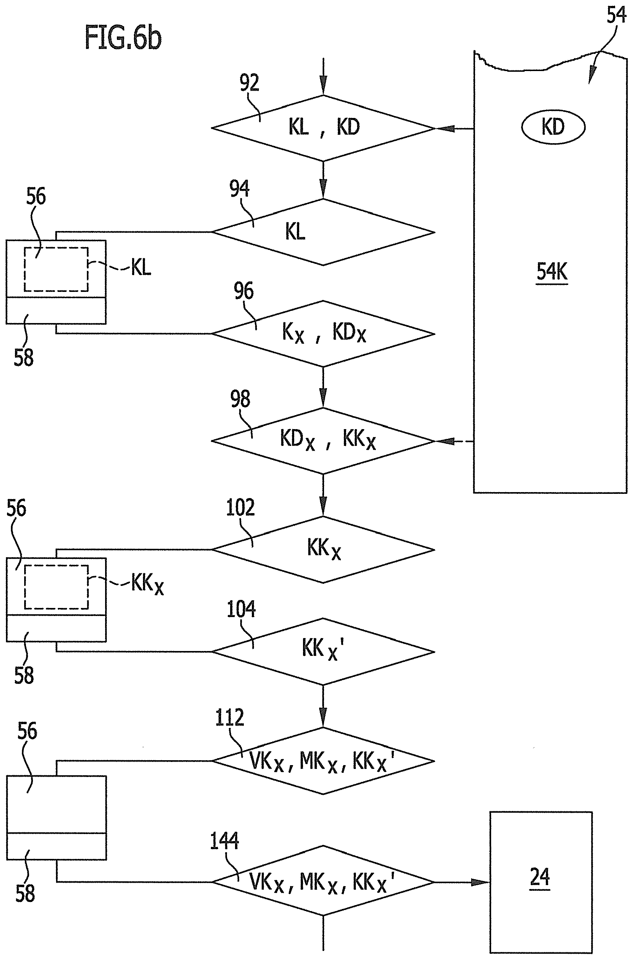

Bei einem zweiten Ausführungsbeispiel eines erfindungsgemäßen Verfahrens, dargestellt in Fig. 6, sind die Schritte 62 bis 78 mit denen des ersten Ausführungsbeispiels gemäß Fig. 5 identisch.

Allerdings folgt bei dem zweiten Ausführungsbeispiel nach dem Schritt 78 in einem Schritt 92 das Laden von Kältemitteldaten KD aus einem Kältemitteldatenspeicher 54K der Datenspeichereinheit 54 und das Erzeugen einer Kältemittelliste KL.

In einem nachfolgenden Schritt 94 wird die Kältemittelliste KL auf der Visualisierungseinheit 56 dargestellt und es besteht für die Bedienungsperson mittels der Eingabeeinheit die Möglichkeit, das Kältemittel Kx aus der Kältemittelliste 94 auszuwählen.

Dies wird im Schritt 96 erfasst und es werden dem ausgewählten Kältemittel Kx die Kältemitteldaten KDx zugeordnet.

In dem nachfolgenden Schritt 98 werden die zu den Kältemitteldaten KDx gehörenden Kältemittelkonfigurationsparameter KKx ermittelt.

Sind die Kältemittelkonfigurationsparameter KKx für das jeweilige Kältemittel vollständig, so kann analog zu den Schritten 82 und 84 des ersten Ausführungsbeispiels ein Darstellen derselben auf der Visualisierungseinheit 56 und bei entsprechender Eingabe durch eine Bedienungsperson in der Eingabeeinheit 58 ein Laden der Verdichterkonfigurationsdaten VKx, der Motorkonfigurationsdaten MKx und der Kältemittelkonfigurationsdaten KKx in die Verdichtersteuerung 24 erfolgen.

Sind allerdings bei den Kältemittelkonfigurationsparametern KKx noch offene oder unvollständige Parameter, so genannte Auswahlparameter, vorhanden, so erfolgt im Schritt 102 eine Darstellung der Auswahlparameter der Kältemittelkonfigurationsparameter KKx auf der Visualisierungseinheit 56 und es besteht mit der Eingabeeinheit 58 die Möglichkeit, die Kältemittelkonfigurationsparameter KKx zu ergänzen.

Im Schritt 104 wird der Prozessor 52 die durch die Eingabeeinheit 58 ergänzten Kältemittelkonfigurationsparameter KKx' erfasst.

Im Schritt 112 stellt der Prozessor 52 dann die Verdichterkonfigurationsparameter VKx die Motorkonfigurationsparameter MKx und die ergänzten Kältemittelkonfigurationsparameter KKx' entweder einzeln oder summarisch auf der Visualisierungseinheit 58 dar, so dass die Bedienungsperson die Möglichkeit hat, durch Einwirken über die Eingabeeinheit 58 das Laden dieser Konfigurationsparameter freizugeben, so dass im Schritt 144 ein Laden der Verdichterkonfigurationsparameter VKx, der Motorkonfigurationsparameter MKx und der ergänzten Kältemittelkonfigurationsparameter KKx' in die Verdichtersteuerung 24 erfolgt.

Auch bei einer Variante des zweiten Ausführungsbeispiels des durch den Prozessor 52 ausgeführten Verfahrens ist der Prozessor so ausgebildet, dass er in der Lage ist, die in der Verdichtersteuerung 24 gespeicherten Verdichterkonfigurationsparameter, die Motorkonfigurationsparameter und die Kältemittelkonfigurationsparameter in das Inbetriebnahmesystem 50 zurückzuladen, um diese zu überprüfen und gegebenenfalls auf der Visualisierungseinheit 56 darzustellen.

Ergänzend hierzu ist beispielsweise bei dieser Variante des zweiten Ausführungsbeispiels im Schritt 112 vorgesehen, dass der Prozessor 52 die Verdichterkonfigurationsparameter VKx mit in der Verdichtersteuerung 24 gespeicherten Verdichterkonfigurationsparametern vergleicht und im Fall von Abweichungen durch eine Warnmeldung auf der Visualisierungseinheit 56 auf die Abweichungen hinweist und diese beispielsweise auf der Visualisierungseinheit 56 auflistet, wobei zur Durchführung des Vergleichs die in der Verdichtersteuerung 24 gespeicherten Verdichterkonfigurationsparameter von dem Prozessor aus der Verdichtersteuerung 24 zurückgeladen werden.

In gleicher Weise ist beispielsweise bei dieser Variante im Schritt 112 vorgesehen, dass der Prozessor 52 die Motorkonfigurationsparameter MKx mit in der Verdichtersteuerung 24 gespeicherten Motorkonfigurationsparametern vergleicht und im Fall von Abweichungen durch eine Warnmeldung auf der Visualisierungseinheit 56 auf die Abweichungen hinweist und diese beispielsweise auf der Visualisierungseinheit 56 auflistet, wobei zur Durchführung des Vergleichs die in der Verdichtersteuerung 24 gespeicherten Motorkonfigurationsparameter von dem Prozessor 52 aus der Verdichtersteuerung 24 zurückgeladen werden.

Ferner ist beispielsweise bei dieser Variante im Schritt 112 vorgesehen, dass der Prozessor 52 die Kältemittelkonfigurationsparameter KKx' mit in der Verdichtersteuerung 24 gespeicherten Kältemittelkonfigurationsparametern vergleicht und im Fall von Abweichungen durch eine Warnmeldung auf der Visualisierungseinheit 56 auf die Abweichungen hinweist und diese beispielsweise auf der Visualisierungseinheit 56 auflistet, wobei zur Durchführung des Vergleichs die in der Verdichtersteuerung 24 gespeicherten Kältemittelkonfigurationsparameter von dem Prozessor 52aus der Verdichtersteuerung 24 zurückgeladen werden.

Diese Lösung hat den Vorteil, dass sich mit dieser Fehlkonfigurationen einfach entdecken und beheben lassen, so dass hierdurch die Benutzerfreundlichkeit noch weiter verbessert werden kann.

## Patentansprüche

1. Inbetriebnahmesystem für eine Kältemittelverdichtereinheit (20), umfassend
einen Kältemittelverdichter (12), einen elektrischen Antriebsmotor (22) für den Kältemittelverdichter (12) und eine Verdichtersteuerung (24), welche Spannung und Drehzahl des Antriebsmotors (22) auf der Basis von in diese Verdichtersteuerung (24) geladenen Sätze von Konfigurationsparametern (VKx, MKx, KKx) ermittelt und den Antriebsmotor (22) entsprechend ansteuert, wobei das Inbetriebnahmesystem (50) einen Verdichterdatenspeicher (54V) aufweist, in welchem zu jeweils möglichen Kältemittelverdichtern (12) Verdichterdaten (VD) gespeichert sind, und einen Motordatenspeicher (54M) aufweist, in welchem zu möglichen Antriebsmotoren (22) Motordaten (MD) gespeichert sind, wobei das Inbetriebnahmesystem (50) einen Prozessor (52) zur Durchführung der Inbetriebnahme, eine Visualisierungseinheit (56) und eine Eingabeeinheit (58) aufweist, wobei die Visualisierungseinheit (56) und die Eingabeeinheit (58) bei der Inbetriebnahme zur Bestimmung des Kältemittelverdichters (12) und des Antriebsmotors (22) dienen, und wobei der Prozessor (52) mittels der Verdichterdaten (VDx) des bestimmten Kältemittelverdichters (Vx) und mittels der Motordaten (MDx) des bestimmten Antriebsmotors (Mx) Verdichterkonfigurationsparameter (VKx) und Motorkonfigurationsparameter (MKx) erzeugt und in die Verdichtersteuerung (24) zum Betrieb des Antriebsmotors (22) lädt.

2. Inbetriebnahmesystem nach Anspruch 1, **dadurch gekennzeichnet, dass** der Prozessor (52) aus den Verdichterdaten (VD) eine Verdichterliste (VL) erzeugt und auf der Visualisierungseinheit (56) darstellt, und dass insbesondere mittels der Eingabeeinheit (58) einer der Kältemittelverdichter (12) in der Verdichterliste (VL) bestimmbar ist.

3. Inbetriebnahmesystem nach einem der voranstehenden Ansprüche, **dadurch gekennzeichnet, dass** der Prozessor (52) mittels der Verdichterdaten (VD) die zu dem bestimmten Kältemittelverdichter (Vx) gehörenden Verdichterkonfigurationsparameter (VKx) erzeugt, und dass insbesondere der Prozessor (52) die Verdichterkonfigurationsdaten (VKx) nach Bestätigung derselben mittels der Eingabeeinheit (58) in die Verdichtersteuerung (24) lädt.

4. Inbetriebnahmesystem nach einem der voranstehenden Ansprüche, **dadurch gekennzeichnet, dass** der Prozessor (52) aus den Motordaten (MD) eine Motorenliste (ML) erstellt und auf der Visualisierungseinheit (56) darstellt, dass insbesondere der Prozessor (52) auf der Basis der Verdichterdaten (VDx) für den bestimmten Kältemittelverdichter (Vx) geeignete Antriebsmotoren (M) aus den Motordaten (MD) auswählt und in der Motorenliste (ML) auf der Visualisierungseinheit (56) darstellt, und/oder dass insbesondere mittels der Eingabeeinheit (58) einer der Antriebsmotoren (Mx) aus der Motorenliste (ML) bestimmbar ist, und/oder dass insbesondere der Prozessor (52) mittels der Motordaten (MDx) die zu dem bestimmten Antriebsmotor (Mx) gehörenden Motorkonfigurationsparameter (MKx) erzeugt, und dass insbesondere der Prozessor (52) die Motorkonfigurationsparameter (MKx) nach Bestätigung derselben mittels der Eingabeeinheit (58) in die Anlagensteuerung (24) lädt.

5. Inbetriebnahmesystem nach einem der voranstehenden Ansprüche, **dadurch gekennzeichnet, dass** der Prozessor (52) aus in einem Kältemitteldatenspeicher (54K) gespeicherten Kältemitteldaten (KD) eine Kältemittelliste (KL) erzeugt und auf der Visualisierungseinheit (56) darstellt, dass insbesondere mittels der Eingabeeinheit (58) eines der Kältemittel (Kx) aus der Kältemittelliste (KL) bestimmbar ist, und/oder dass insbesondere der Prozessor (52) mittels der Kältemitteldaten (KD) die zu dem bestimmten Kältemittel (Kx) gehörenden Kältemittelkonfigurationsparameter (KKx) erzeugt.

6. Inbetriebnahmesystem nach einem der voranstehenden Ansprüche, **dadurch gekennzeichnet, dass** der Prozessor (52) aus den Kältemittelkonfigurationsparametern (KKx) Auswahlparameter extrahiert und auf der Visualisierungseinheit (56) darstellt, und dass insbesondere mittels der Eingabeeinheit (58) die dargestellten Auswahlparameter bestimmbar sind.

7. Inbetriebnahmesystem nach Anspruch 6, **dadurch gekennzeichnet, dass** der Prozessor (52) die Kältemittelkonfigurationsparameter (KK) insbesondere mitsamt den bestimmten Auswahldaten nach einer Bestätigung derselben mittels der Eingabeeinheit (58) in die Anlagesteuerung (24) lädt.

8. Inbetriebnahmesystem nach einem der voranstehenden Ansprüche, **dadurch gekennzeichnet, dass** der Verdichterdatenspeicher (54V) der Motordatenspeicher (54M) und der Kältemitteldatenspeicher (54K) in einer Datenspeichereinheit (54) realisiert sind, dass insbesondere die Datenspeichereinheit (54) zur Aktualisierung der Verdichterdaten (VD) und/oder der Motordaten (MD) und/oder der Kältemitteldaten (KD) mit einem externen Server (60) verbindbar ist.

9. Inbetriebnahmesystem nach einem der voranstehenden Ansprüche, **dadurch gekennzeichnet, dass** die Verdichtersteuerung (24) auf der Basis von mindestens einem der Sätze von Verdichterkonfigurationsparametern (VKx), Motorkonfigurationsparametern (MKx) und Kältemittelkonfigurationsparametern (KKx) den Antriebsmotor (22) steuert.

10. Inbetriebnahmesystem nach einem der voranstehenden Ansprüche, **dadurch gekennzeichnet, dass** die Verdichtersteuerung (24) den Kältemittelverdichter (12) innerhalb vorgesehener Einsatzgrenzen betreibt.

11. Inbetriebnahmesystem nach einem der voranstehenden Ansprüche, **dadurch gekennzeichnet, dass** die Verdichtersteuerung (24) einen Frequenzumrichter (26) umfasst, dass insbesondere der Frequenzumrichter (26) auf der Basis der geladenen Verdichterkonfigurationsparameter (VKx) und der geladenen Motorkonfigurationsparameter (MKx) arbeitet.

12. Verfahren zur Inbetriebnahme einer Kältemittelverdichtereinheit (20), umfassend
einen Kältemittelverdichter (12), einen elektrischen Antriebsmotor (22) für den Kältemittelverdichter (12) und eine Verdichtersteuerung (24), welche Spannung und Drehzahl des Antriebsmotors (22) auf der Basis von in diese Verdichtersteuerung (24) geladenen Sätzen von Konfigurationsparametern (VKx, MKx, KKx) ermittelt und den Antriebsmotor (22) entsprechend ansteuert, wobei aus einem Verdichterdatenspeicher (54v), in welchem zu jeweils möglichen Kältemittelverdichtern (12) Verdichterdaten (VD) gespeichert sind, und einem Motordatenspeicher (54M), in welchem zu möglichen Antriebsmotoren (22) Motordaten (MD) gespeichert sind, zur Durchführung der Inbetriebnahme mögliche Kältemittelverdichter (12) und Antriebsmotoren (22) bestimmt werden, und wobei von einem Inbetriebnahmesystem (50) mittels der Verdichterdaten (VD) des bestimmten Kältemittelverdichters (V) und mittels der Motordaten des bestimmten Antriebsmotors (M) Verdichterkonfigurationsparameter (VKx) und Motorkonfigurationsparameter (MKx) erzeugt und in die Verdichtersteuerung (24) zum Betrieb des Antriebsmotors (22) geladen werden.

13. Verfahren nach Anspruch 12, **dadurch gekennzeichnet, dass** aus den gespeicherten Verdichterdaten (VD) eine Verdichterliste (VL) erzeugt und auf der Visualisierungseinheit (56) dargestellt wird, dass insbesondere mittels der Eingabeeinheit (58) einer der Kältemittelverdichter (Vx) in der Verdichterliste bestimmt wird, und/oder dass insbesondere mittels der Verdichterdaten (VD) die zu dem bestimmten Kältemittelverdichter (Vx) gehörenden Verdichterkonfigurationsparameter (VK) erzeugt werden, dass insbesondere die Verdichterkonfigurationsparameter (VK) nach Bestätigen derselben mittels der Eingabeeinheit (58) in die Verdichtersteuerung (24) geladen werden.

14. Verfahren nach Anspruch 12 oder 13, **dadurch gekennzeichnet, dass** aus den Motordaten (MD) eine Motorenliste (ML) erstellt und auf der Visualisierungseinheit (56) dargestellt wird, und/oder dass insbesondere mittels der Verdichterdaten (VD) für den bestimmten Kältemittelverdichter (Vx) geeignete Antriebsmotoren (M) aus den Motordaten (MD) ausgewählt und in der Motorenliste (ML) auf der Visualisierungseinheit (56) dargestellt werden, und/oder dass insbesondere mittels der Eingabeeinheit (58) ein Antriebsmotor (Mx) aus der Motorenliste (ML) bestimmt wird, und/oder dass insbesondere mittels der Motordaten (MD) die zu dem bestimmten Antriebsmotor (Mx) gehörenden Motorkonfigurationsparameter (MKx) erzeugt werden, dass insbesondere die Motorkonfigurationsparameter (MKx) nach Bestätigen derselben mittels der Eingabeeinheit (58) in die Verdichtersteuerung (24) geladen werden.

15. Verfahren nach einem der Ansprüche 12 bis 14, **dadurch gekennzeichnet, dass** aus in einem Kältemitteldatenspeicher (54k) gespeicherten Kältemitteldaten (KD) eine Kältemittelliste (KL) erzeugt und auf der Visualisierungseinheit (56) dargestellt wird, dass insbesondere mittels der Eingabeeinheit (58) ein Kältemittel (Kx) aus der Kältemittelliste (KL) bestimmt wird, und/oder dass insbesondere mittels der Kältemitteldaten (KD) die zu dem bestimmten Kältemittel (Kx) gehörenden Kältemittelkonfigurationsparameter (KKx) erstellt werden, dass insbesondere aus den Kältemittelkonfigurationsparameter (KKx) Auswahlparameter extrahiert und auf der Visualisierungseinheit (56) dargestellt werden, dass insbesondere mittels der Eingabeeinheit (58) die dargestellten Auswahlparameter bestimmt werden, und/oder dass insbesondere die Kältemittelkonfigurationsparameter (KKx), insbesondere mitsamt den markierten Auswahlparametern, nach einer Bestätigung derselben mittels der Eingabeeinheit (58), in die Verdichtersteuerung (24) geladen werden.

## Claims

1. An initialising system for a refrigerant compressor unit (20), including a refrigerant compressor (12), an electrical drive motor (22) for the refrigerant compressor (12) and a compressor controller (24) that determines the voltage and speed of the drive motor (22) on the basis of sets of configuration parameters (VKx, MKx, KKx) loaded into this compressor controller (24) and controls the drive motor (22) accordingly, wherein the initialising system (50) has a compressor data memory (54V), in which compressor data (VD) relating to respectively possible refrigerant compressors (12) are stored, and a motor data memory (54M), in which motor data (MD) relating to possible drive motors (22) are stored, wherein the initialising system (50) has a processor (52) for performing the initialising, a display unit (56) and an input unit (58), wherein during initialisation the display unit (56) and the input unit (58) serve to determine the refrigerant compressor (12) and the drive motor (22), and wherein the processor (52) uses the compressor data (VDx) of the determined refrigerant compressor (Vx) and uses the motor data (MDx) of the determined drive motor (Mx) to generate compressor configuration parameters (VKx) and motor configuration parameters (MKx) and loads them into the compressor controller (24) for the purpose of operating the drive motor (22).

2. An initialising system according to claim 1, **characterised in that** the processor (52) generates a list of compressors (VL) from the compressor data (VD) and displays it on the display unit (56) and **in that** in particular one of the refrigerant compressors (12) in the compressor list (VL) is determinable using the input unit (58).

3. An initialising system according to one of the preceding claims, **characterised in that** the processor (52) uses the compressor data (VD) to generate the compressor configuration parameters (VKx) that belong to the determined refrigerant compressor (Vx) and **in that** in particular the processor (52) loads the compressor configuration data (VKx) into the compressor controller (24) after confirmation thereof using the input unit (58).

4. An initialising system according to one of the preceding claims, **characterised in that** the processor (52) generates a list of motors (ML) from the motor data (MD) and displays it on the display unit (56), **in that** in particular the processor (52) selects drive motors (M) from the motor data (MD) that, on the basis of the compressor data (VDx), are suitable for the determined refrigerant compressor (Vx) and displays them in the motor list (ML) on the display unit (56), and/or **in that** in particular one of the drive motors (Mx) from the motor list (ML) is determinable using the input unit (58), and/or **in that** in particular the processor (52) uses the motor data (MDx) to generate the motor configuration parameters (MKx) that belong to the determined drive motor (Mx), and **in that** in particular the processor (52) loads the motor configuration parameters (MKx) into the plant controller (24) after confirmation thereof using the input unit (58).

5. An initialising system according to one of the preceding claims, **characterised in that** the processor (52) generates a list of refrigerants (KL) from refrigerant data (KD) stored in a refrigerant data memory (54K) and displays it on the display unit (56), **in that** in particular one of the refrigerants (Kx) from the refrigerant list (KL) is determinable using the input unit (58), and/or **in that** in particular the processor (52) generates the refrigerant configuration parameters (KKx) that belong to the determined refrigerant (Kx) using the refrigerant data (KD).

6. An initialising system according to one of the preceding claims, **characterised in that** the processor (52) extracts selection parameters from the refrigerant configuration parameters (KKx) and displays them on the display unit (56), and **in that** in particular the displayed selection parameters are determinable using the input unit (58).

7. An initialising system according to claim 6, **characterised in that** the processor (52) loads the refrigerant configuration parameters (KK), in particular together with the determined selection data, into the plant controller (24) after a confirmation thereof using the input unit (58).

8. An initialising system according to one of the preceding claims, **characterised in that** the compressor data memory (54V), the motor data memory (54M) and the refrigerant data memory (54K) are formed in a data memory unit (54), **in that** in particular, for the purpose of updating the compressor data (VD) and/or the motor data (MD) and/or the refrigerant data (KD), the data memory unit (54) is connectable to an external server (60).

9. An initialising system according to one of the preceding claims, **characterised in that** the compressor controller (24) controls the drive motor (22) on the basis of at least one of the sets of compressor configuration parameters (VKx), motor configuration parameters (MKx) and refrigerant configuration parameters (KKx).

10. An initialising system according to one of the preceding claims, **characterised in that** the compressor controller (24) operates the refrigerant compressor (12) within defined usage limits.

11. An initialising system according to one of the preceding claims, **characterised in that** the compressor controller (24) includes a frequency converter (26), **in that** in particular the frequency converter (26) operates on the basis of the loaded compressor configuration parameters (VKx) and the loaded motor configuration parameters (MKx).

12. A method for initialising a refrigerant compressor unit (20), including a refrigerant compressor (12), an electrical drive motor (22) for the refrigerant compressor (12) and a compressor controller (24) that determines the voltage and speed of the drive motor (22) on the basis of sets of configuration parameters (VKx, MKx, KKx) loaded into this compressor controller (24) and controls the drive motor (22) accordingly, wherein possible refrigerant compressors (12) and drive motors (22) are determined from a compressor data memory (54v), in which compressor data (VD) for respectively possible refrigerant compressors (12) are stored, and a motor data memory (54M), in which motor data (MD) for possible drive motors (22) are stored, for the purpose of initialisation, and wherein compressor configuration parameters (VKx) and motor configuration parameters (MKx) are generated by an initialising system (50) using the compressor data (VD) of the determined refrigerant compressor (V) and using the motor data of the determined drive motor (M) and are loaded into the compressor controller (24) for the purpose of operating the drive motor (22).

13. A method according to claim 12, **characterised in that** a list of compressors (VL) is generated from the stored compressor data (VD) and displayed on the display unit (56), **in that** in particular one of the refrigerant compressors (Vx) in the compressor list is determined using the input unit (58), and/or **in that** in particular the compressor configuration parameters (VK) that belong to the determined refrigerant compressor (Vx) are generated using the compressor data (VD), **in that** in particular the compressor configuration parameters (VK) are loaded into the compressor controller (24) after confirmation thereof using the input unit (58).

14. A method according to claim 12 or 13, **characterised in that** a list of motors (ML) is compiled from the motor data (MD) and displayed on the display unit (56), and/or **in that** in particular suitable drive motors (M) are selected from the motor data (MD) using the compressor data (VD) for the determined refrigerant compressor (Vx) and are displayed in the motor list (ML) on the display unit (56), and/or **in that** in particular a drive motor (Mx) from the motor list (ML) is determined using the input unit (58), and/or **in that** in particular the motor configuration parameters (MKx) that belong to the determined drive motor (Mx) are generated using the motor data (MD), **in that** in particular the motor configuration parameters (MKx) are loaded into the compressor controller (24) after confirmation thereof using the input unit (58).

15. A method according to one of claims 12 to 14, **characterised in that** a list of refrigerants (KL) is generated from refrigerant data (KD) stored in a refrigerant data memory (54k) and is displayed on the display unit (56), **in that** in particular a refrigerant (Kx) from the refrigerant list (KL) is determined using the input unit (58), and/or **in that** in particular the refrigerant configuration parameters (KKx) that belong to the determined refrigerant (Kx) are compiled using the refrigerant data (KD), **in that** in particular selection parameters are extracted from the refrigerant configuration parameters (KKx) and displayed on the display unit (56), **in that** in particular displayed selection parameters are determined using the input unit (58), and/or **in that** in particular the refrigerant configuration parameters (KKx), in particular together with the marked selection parameters, are loaded into the compressor controller (24) after a confirmation thereof using the input unit (58).

## Revendications

1. Système de mise en service pour une unité de compression de réfrigérant (20), comportant
un compresseur de réfrigérant (12), un moteur d'entraînement électrique (22) pour le compresseur de réfrigérant (12) et un dispositif de commande de compresseur (24) qui spécifie une tension et une vitesse de rotation du moteur d'entraînement (22) sur la base de jeux de paramètres de configuration (VKx, MKx, KKx) chargés dans ce dispositif de commande de compresseur (24) et commande en conséquence le moteur d'entraînement (22), dans lequel le système de mise en service (50) comprend une mémoire de données de compresseur (54V) dans laquelle sont stockées des données de compresseur (VD) liées respectivement à de possibles compresseurs de réfrigérant (12), et une mémoire de données de moteur (54M) dans laquelle sont stockées des données de moteur (MD) liées à de possibles moteurs d'entraînement (22), dans lequel le système de mise en service (50) comprend un processeur (52) pour l'exécution de la mise en service, une unité de visualisation (56) et une unité d'entrée (58), dans lequel l'unité de visualisation (56) et l'unité d'entrée (58) servent, lors de la mise en service, à la détermination du compresseur de réfrigérant (12) et du moteur d'entraînement (22), et dans lequel le processeur (52) génère, au moyen des données de compresseur (VDx) du compresseur de réfrigérant déterminé (Vx) et au moyen des données de moteur (MDx) du moteur d'entraînement déterminé (Mx), des paramètres de configuration de compresseur (VKx) et des paramètres de configuration de moteur (MKx) et les charge dans le dispositif de commande de compresseur (24) pour le fonctionnement du moteur d'entraînement (22).

2. Système de mise en service selon la revendication 1, **caractérisé en ce que** le processeur (52) génère, à partir des données de compresseur (VD), une liste de compresseurs (VL) et l'affiche sur l'unité de visualisation (56), et **en ce que**, en particulier au moyen de l'unité d'entrée (58), un des compresseurs de réfrigérant (12) peut être déterminé dans la liste de compresseurs (VL).

3. Système de mise en service selon l'une quelconque des revendications précédentes, **caractérisé en ce que** le processeur (52) génère, au moyen des données de compresseur (VD), les paramètres de configuration de compresseur (VKx) appartenant au compresseur de réfrigérant déterminé (Vx), et **en ce que**, en particulier, le processeur (52) charge les données de configuration de compresseur (VKx), après leur confirmation au moyen de l'unité d'entrée (58), dans le dispositif de commande de compresseur (24).

4. Système de mise en service selon l'une quelconque des revendications précédentes, **caractérisé en ce que** le processeur (52) établit, à partir des données de moteur (MD), une liste de moteurs (ML) et l'affiche sur l'unité de visualisation (56), **en ce que**, en particulier, le processeur (52) sélectionne, sur la base des données de compresseur (VDx), des moteurs d'entraînement appropriés (M) pour le compresseur de réfrigérant déterminé (Vx) à partir des données de moteur (MD) et les affiche dans la liste de moteurs (ML) sur l'unité de visualisation (56), et/ou **en ce que**, en particulier au moyen de l'unité d'entrée (58), un des moteurs d'entraînement (Mx) peut être déterminé à partir de la liste de moteurs (ML), et/ou **en ce que**, en particulier, le processeur (52) génère, au moyen des données de moteur (MDx), les paramètres de configuration de moteur (MKx) appartenant au moteur d'entraînement déterminé (Mx), et **en ce que**, en particulier, le processeur (52) charge les paramètres de configuration de moteur (MKx), après leur confirmation au moyen de l'unité d'entrée (58), dans le dispositif de commande de l'installation (24).

5. Système de mise en service selon l'une quelconque des revendications précédentes, **caractérisé en ce que** le processeur (52) génère, à partir de données de réfrigérant (KD) stockées dans une mémoire de données de réfrigérant (54K), une liste de réfrigérants (KL) et l'affiche sur l'unité de visualisation (56), **en ce que**, en particulier au moyen de l'unité d'entrée (58) un des réfrigérants (Kx) peut être déterminé à partir de la liste de réfrigérants (KL), et/ou **en ce que**, en particulier, le processeur (52) génère, au moyen des données de réfrigérant (KD), les paramètres de configuration de réfrigérant (KKx) appartenant au réfrigérant déterminé (Kx).

6. Système de mise en service selon l'une quelconque des revendications précédentes, **caractérisé en ce que** le processeur (52) extrait, à partir des paramètres de configuration de réfrigérant (KKx), des paramètres de sélection et les affiche sur l'unité de visualisation (56), et **en ce que**, en particulier au moyen de l'unité d'entrée (58), les paramètres de sélection affichés peuvent être déterminés.

7. Système de mise en service selon la revendication 6, **caractérisé en ce que** le processeur (52) charge les paramètres de configuration de réfrigérant (KKx) en particulier conjointement avec les données de sélection déterminées, après leur confirmation au moyen de l'unité d'entrée (58), dans le dispositif de commande de l'installation (24).

8. Système de mise en service selon l'une quelconque des revendications précédentes, **caractérisé en ce que** la mémoire de données de compresseur (54V), la mémoire de données de moteur (54M) et la mémoire de données de réfrigérant (54K) sont réalisées dans une unité de mémoire de données (54), **en ce que**, en particulier, l'unité de mémoire de données (54) peut être reliée à un serveur externe (60) pour l'actualisation des données de compresseur (VD) et/ou des données de moteur (MD) et/ou des données de réfrigérant (KD).

9. Système de mise en service selon l'une quelconque des revendications précédentes, **caractérisé en ce que** le dispositif de commande de compresseur (24) commande le moteur d'entraînement (22) sur la base d'au moins un des jeux des paramètres de configuration de compresseur (VKx), des paramètres de configuration de moteur (MKx) et des paramètres de configuration de réfrigérant (KKx).

10. Système de mise en service selon l'une quelconque des revendications précédentes, **caractérisé en ce que** le dispositif de commande de compresseur (24) fait fonctionner le compresseur de réfrigérant (12) à l'intérieur de limites de mise en œuvre prévues.

11. Système de mise en service selon l'une quelconque des revendications précédentes, **caractérisé en ce que** le dispositif de commande de compresseur (24) comporte un convertisseur de fréquences (26), **en ce que**, en particulier, le convertisseur de fréquence (26) fonctionne sur la base des paramètres de configuration de compresseur chargés (VKx) et des paramètres de configuration de moteur chargés (MKx).

12. Procédé de mise en service d'une unité de compression de réfrigérant (20), comportant
un compresseur de réfrigérant (12), un moteur d'entraînement électrique (22) pour le compresseur de réfrigérant (12) et un dispositif de commande de compresseur (24) qui spécifie une tension et une vitesse de rotation du moteur d'entraînement (22) sur la base de jeux de paramètres de configuration (VKx, MKx, KKx) chargés dans ce dispositif de commande de compresseur (24) et commande en conséquence le moteur d'entraînement (22), dans lequel, à partir d'une mémoire de données de compresseur (54V), dans laquelle sont stockées des données de compresseur (VD) liées respectivement à de possibles compresseurs de réfrigérant (12), et d'une mémoire de données de moteur (54M), dans laquelle sont stockées des données de moteur (MD) liées à de possibles moteurs d'entraînement (22), de possibles compresseurs de réfrigérant (12) et moteurs d'entraînement (22) sont déterminés pour l'exécution de la mise en service, et dans lequel des paramètres de configuration de compresseur (VKx) et des paramètres de configuration de moteur (MKx) sont générés par un système de mise en service (50) au moyen des données de compresseur (VD) du compresseur de réfrigérant déterminé (V) et au moyen des données de moteur du moteur d'entraînement déterminé (M), et chargés dans le dispositif de commande de compresseur (24) pour le fonctionnement du moteur d'entraînement (22) .

13. Procédé selon la revendication 12, **caractérisé en ce qu'**une liste de compresseurs (VL) est générée à partir des données de compresseur stockées (VD) et affichée sur l'unité de visualisation (56), **en ce que**, en particulier au moyen de l'unité d'entrée (58), un des compresseurs de réfrigérant (Vx) est déterminé dans la liste de compresseurs, et/ou **en ce que**, en particulier au moyen des données de compresseur (VD), les paramètres de configuration de compresseur (VK) appartenant au compresseur de réfrigérant déterminé (Vx) sont générés, **en ce que**, en particulier, les paramètres de configuration de compresseur (VK) après leur confirmation au moyen de l'unité d'entrée (58) sont chargés dans le dispositif de commande de compresseur (24) .

14. Procédé selon la revendication 12 ou 13, **caractérisé en ce qu'**une liste de moteurs (ML) est établie à partir des données de moteur (MD) et est affichée sur l'unité de visualisation (56), et/ou **en ce que**, en particulier au moyen des données de compresseur (VD), des moteurs d'entraînement (M) appropriés pour le compresseur de réfrigérant déterminé (Vx) sont sélectionnés à partir des données de moteur (MD) et affichés dans la liste de moteurs (ML) sur l'unité de visualisation (56), et/ou **en ce que**, en particulier au moyen de l'unité d'entrée (58), un moteur d'entraînement (Mx) est déterminé à partir de la liste de moteurs (ML), et/ou **en ce que**, en particulier au moyen des données de moteur (MD), les paramètres de configuration de moteur (MKx) appartenant au moteur d'entraînement déterminé (Mx) sont générés, **en ce que**, en particulier, les paramètres de configuration de moteur (MKx) après leur confirmation au moyen de l'unité d'entrée (58) sont chargés dans le dispositif de commande de compresseur (24).

15. Procédé selon l'une quelconque des revendications 12 à 14, **caractérisé en ce qu'**une liste de réfrigérants (KL) est générée à partir de données de réfrigérant (KD) stockées dans une mémoire de données de réfrigérant (54K) et affichée sur l'unité de visualisation (56), **en ce que**, en particulier au moyen de l'unité d'entrée (58), un réfrigérant (Kx) est déterminé à partir de la liste de réfrigérants (KL), et/ou **en ce que**, en particulier au moyen des données de réfrigérant (KD), les paramètres de configuration de réfrigérant (KKx) appartenant au réfrigérant déterminé (Kx) sont établis, **en ce que**, en particulier, des paramètres de sélection sont extraits des paramètres de configuration de réfrigérant (KKx) et sont affichés sur l'unité de visualisation (56), **en ce que**, en particulier, les paramètres de sélection affichés sont déterminés au moyen de l'unité d'entrée (58) et/ou **en ce que**, en particulier, les paramètres de configuration de réfrigérant (KKx), en particulier conjointement avec les paramètres de sélection marqués, après leur confirmation au moyen de l'unité d'entrée (58), sont chargés dans le dispositif de commande de compresseur (24).
